Europäisches Patentamt

European Patent Office

Office européen des brevets

(19)

(11) Publication number: 0 175 839
A1

# (12) EUROPEAN PATENT APPLICATION

(21) Application number: 85105438.7

(22) Date of filing: 03.05.85

(51) Int. Cl.⁴: G 11 B 5/012

(30) Priority: 26.09.84 US 654507

(43) Date of publication of application:
02.04.86 Bulletin 86/14

(84) Designated Contracting States:
DE FR GB

(71) Applicant: Qew Corporation
1778 McCarthy Boulevard
Milpitas California 95035(US)

(72) Inventor: Moon, William G.
1662 Langport Drive
Sunnyvale California 94087(US)

(72) Inventor: Harrison, Joel N.
15312 Via Del Sur
Monte Sereno California 95030(US)

(72) Inventor: Brown, David A.
13751 Beaumont Avenue
Sartoga California 95070(US)

(74) Representative: Meddle, Alan Leonard et al,
FORRESTER & BOEHMERT Widenmayerstrasse 4/I
D-8000 München 22(DE)

(54) Data transducer restraint.

(57) A data transducer restraint mechanism restrains the range of movement of a data transducer (18) along a locus generally normal to the plane of a data surface (20) of a rotating disk data storage device (10) so as to prevent the head from damaging the data surface in response to shock forces along its locus of restrained movement. Various means are described to achieve the restraint required, such as tab structure (26) provided on the transducer and spaced from a precisely formed surface (28) on a beam (30) which is carried by a frame (12) of the device (10) and is precisely adjustable by screws (32).

FIG. I

DATA TRANSDUCER RESTRAINT

THE PRESENT INVENTION concerns rotating disk data storage devices. More particularly, the present invention relates to the restraining of the data transducers ("heads") of such storage devices to prevent them from damaging the storage surfaces for useful data.

Rotating disk data storage devices employing a data head which flies over a rotating magnetic storage disk in close proximity to the storage surface on an air cushion or bearing have become very effective as mass storage devices, capable of storing a considerable amount of useful data. One popular type of data head is formed of ferrite material and has three longitudinal rails when viewed in cross section. The ferrite bead is suspended at the end of a flexible beam or "flexure" which positions the head radially relative to concentric data tracks laid down on the data storage surface during writing operations of the head. In addition, the flexure typically applies a bias force to the head to urge it toward the data surface. This bias, typically on the order of 9-15 grams of preload, is overcome by the air bearing created during rotation of the disk. Some form of acutator, whether linear or rotary, is typically linked to the flexure and converts electrical positioning signals into mechanical movement of the flexure and head assembly to achieve head positioning.

One significant drawback in the versatility of disk drives of the type being described is that such drives are quite susceptible to damage to both the head and the disk surface when the drive is subjected to sharp external forces resulting from e.g. dropping the drive or other instances of rough handling, particularly when the force vectors are normal to the plane of the disk data storage surface.

Damage to the head or disk surface usually occurs when impulse shock forces reach 30g's or more (one g being equal to the force of gravity). The damage results when the head responds to the shock impulse by first moving away from the disk surface and then returning to it with considerable energy attributable not only to the response of the flexure to the shock force but also to the bias force which adds further energy to the head. For example, applicants have discovered that a sharp impulse force having a magnitude of approximately 800 g's and a duration of 2 msec. is produced when a disk drive is dropped merely four inches (101.6 mm) onto a hard, non-yielding surface.

The resultant "head slap" is likely to dent the disk surface and/or score or crack the ferrite bead. Dents or depressions in the disk data storage surface not only lead to loss of data due to drop in and drop out phenonema, the resultant craters form rims which project above the nominal altitude of the disk surface and pose further hazards to the low-flying head. In addition, the protruding rims of the craters or dents cause the magnetic storage media to flake off and contaminate the normally enclosed, sealed environment of the disk drive leading to further head crash conditions and/or loss of data. A chipped or cracked magnetic head structure is unlikely to generate the desired flux reversals required to write or read back the useful data.

One other failure mode resulting directly from head slap is gouging of the data storage surface. This mode sometimes occurs when the head becomes tilted by the shock force and one or more of the very sharp corners of the head chisels into the disk surface.

Thus, a need has arisen to prevent "head slap" damage to disk drives caused by impulse forces.

An object of the present invention is to prevent head and disk damage in rotating disk data storage devices otherwise resulting from sharp external forces.

Another object of the present invention is to restrain the head mechanically so that it has very little available range for relative movement normal to the disk surface and thereby is prevented from accumulating sufficient kinetic energy to damage itself and/or the disk surface.

A further object of the present invention is to provide a head restraint mechanism which maintains self registration with the data storage surface so that the head is prevented from relative movement away from the storage surface beyond a safe range, such as six mils (15 thousandths of a centimetre).

One more object of the present invention is to provide a variety of low cost and easily implemented methods and means for restraining the range of movement and damping the actual movement of the head in response to sharp normal impulse forces to prevent head and disk surface damage.

Accordingly, the present invention provides a rotating disk data storage device comprising a base, at least one data storage disk rotatingly spindled to the base and rotated by spindle motor means, said disk including at least one major surface adapted for storage of useful data in the form of magnetic flux reversals recorded thereon, a data transducer mounted at one end of a flexure and held in close proximity to the data storage surface upon an air bearing resulting from relative movement between the transducer and the disk, transducer actuator means mounted to the base and connected to the other end of the flexure for moving the transducer between selected concentric data tracks of the data storage surface during track-seeking operations and for maintaining the transducer in alignment with each selected data track during read/write operations, and transducer restraint means for restraining the range of movement of the transducer along a locus generally normal to the plane of the data storage surface.

The head restraint means preferably limits the range of movement of the head to not more than six mils (15 thousandths of a centimetre) perpendicular to the data surface.

In one preferred implementation, the data storage disk includes a mounting hub rotatingly engaging a spindle of the base with the head restraint means comprising a flange of the hub extending rapidly outwardly over said data surface and being adapted to limit the range of movement of the head generally perpendicular to the surface of the data storage disk. This implementation desriably achieves self-registration with the disk surface in that the flange follows any bearing run out or wobble occuring at the disk spindle.

Another preferred implementation is where the flexure includes an upwardly extending tab member and wherein the head restraint means comprises a precisely ground surface of the base which is substantially parallel to and facing the disk surface adjacent to the tab member throughout its locus of movement.

A further preferred implementation is where the head restraint means comprises a beam formed as a part of the head actuator and generally overlies the flexure. The beam includes a stop to limit the range of movement of the head.

Yet another preferred implementation is where the head restraint means comprises a beam formed as a part of said head actuator and generally overlies the flexure and includes an elastomeric member placed between the beam and the head to dampen shock impulses which are generally perpendicular to the plane of the disk surface and further to limit the range of movement of the head in response to the shock forces.

In order that the invention may be readily understood, embodiments thereof will now be described, by way of example, with reference to the accompanying drawings, in which:

FIGURE 1 is a somewhat schematic orthogonal view of an idealized disk drive incorporating the principles of the present invention;

FIGURE 2 is a somewhat schematic top plan view of the ideal disk drive depicted in Figure 1;

FIGURE 3 is a diagrammatic view in side elevation of a second preferred embodiment of the present invention;

FIGURE 4 is a diagrammatic view in side elevation of a third preferred embodiment of the present invention;

FIGURE 5 is a diagrammatic view in side elevation of a fourth preferred embodiment of the present invention;

FIGURE 6 is a view in side elevation and section of a disk drive incorporating the principles of the present invention in a fifth preferred embodiment thereof; and

FIGURE 7 is a greatly enlarged view of a portion of the disk drive illustrated in Figure 6.

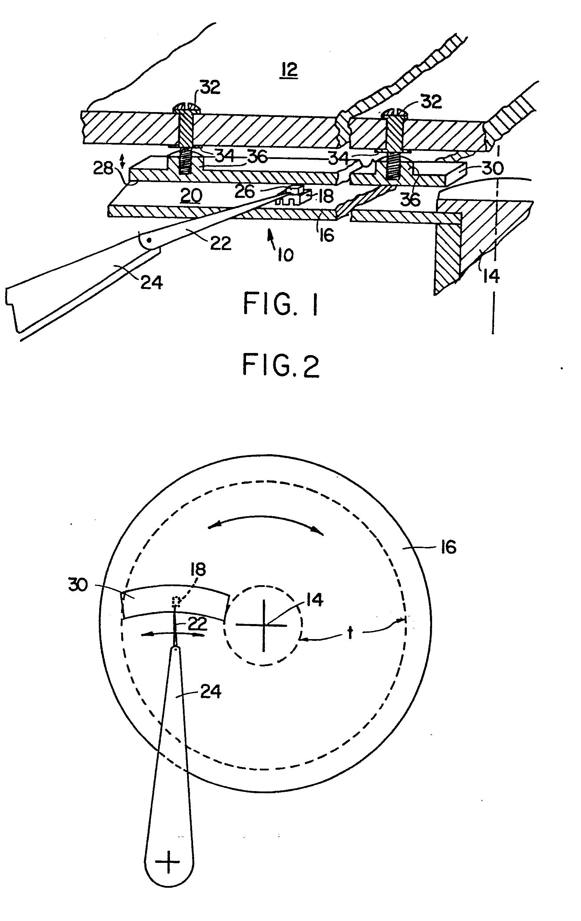

An idealized rotating disk storage device 10 is depicted in Figures 1 and 2 for the purpose of illustrating the general principles of the present invention. The device 10 includes a base or frame 12, a disk spindle 14 which is journalled to the base 12 and which enables rotation of a disk 16 within a precise plane of rotation. A three rail head transducer 18 flies in close proximity to a data storage surface 20 of the disk 16 when it rotates at a predetermined angular velocity and thereby creates an air bearing or cushion. A support flexure 22, such as a "Whitney" flexure supports the transducer 18 in proper flying orientation relative to the disk 16 and its multiplicity of concentric data tracks (t) formed on the data storage surface 20.

The flexure 22 is mounted to an actuator arm 24 which is also rationally mounted to the frame 12 and which is rotated by a suitable rotary actuator such as a type shown in US Patent No. 4490635 the disclosure of which is hereby incorporated by reference. The rotary actuator moves the transducer 18 to and between concentric data tracks formed on the data surface 20 between the dashed concentric circles in a useful data zone t. The flexure 22 applies a bias force of approximately 9 to 15 grams of load force to the head 18 to urge it toward the storage surface 20. This force assures that the head 18 maintains the proper flying attitude during operations of the disk drive.

The transducer 18 is provided with a tab structure 26 which is spaced apart from a precisely formed surface 28 by several thousandths of an inch (several thousandths of a centimetre). The tab structure may be a U-shaped member mounted to the head 18 in a longituidinal orientation.

In the idealized case, the surface 28 is formed on the face of a beam 30 which is precisely adjusted by screws 32 through the base casting 12 so that the surface is parllel with the data storage surface 20 of the storage disk 16 and so that its precise surface 28 is brought very close to the tab structure 26. Furthermore, the surface 28 extends ideally thoughout the entire locus of possible movement of the transducer 18 relative to the data storage surface 20. To achieve unrestricted movement, the flexure 22 may be mounted along the longitudinal axis of the actuator arm 24 as shown in Figure 2 so that the surface 28 and the structural member defining it are cleared by the support arm 24 which supports and moves the flexure 22 and transducer 18. Alternatively, the flexure 22 may be aligned at an obtuse angle relative to the support arm 24.

Applicants have discovered that damage to the data storage surface 20 of the disk 16 is most likely to occur when the drive 10 is subjected to severe impulse forces having major vector components normal to the plane of the data storage surface 20. These components cause the head to lift away from the surface 20 and then return to stike the surface with a sharp slap. The present invention rests on the discovery that by restraining the head 18 from all but very slight permissible movement away from the data surface 20, the head 18 will not store sufficient enerqy to damage the storage surface 20. Consequently, the surface 28 should be as close to the transducer 18 as possible without interfering with its proper flying operations. A clearance of approximately six thousandths of an inch (fifteen thousandths of a centimetre) has been found to be the practical maximum clearance between the head 18 and restraining surface 28. Any greater clearance has been found to subject the data surface 20 to damage from "head slap".

In the idealized depiction of Figures 1 and 2, an adjustment mechanism for adjusting the relative clearance between the tab 26 of the flying head transducer 18 and the surface 28 is provided. Two identical threaded bolts 32 pass through suitable journal openings in the base casting 12. The adjustment bolts 32 are free to rotate freely relative to the base 12.

Retaining washers 34 are press fit or swaged on to the bolts 32 in order to retain them precisely in place relative to the base 12. Threaded ends of the bolts 32 mate with threads formed in enlarged regions 36 of the beam 30. As the bolts 32 rotate, the beam 30 is thereby moved up and down relative to the adjacent flying head 18. In this manner the beam 30 may be precisely adjusted so that the desired clearance of 6 mils (15 thousandths of a centimetre) may be established between the surface 28 and U-shaped tab 26 of the transducer 18 throughout the locus of possible rotary movement of the actuator arm 24.

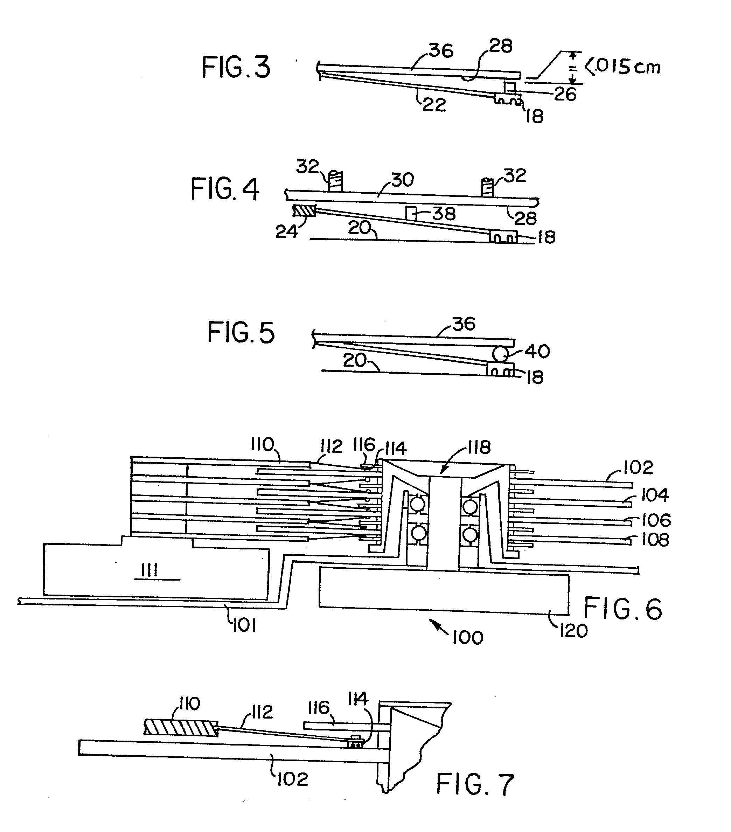

Figure 3 illustrates a second preferred embodiment. Therein, a beam 36 having a suitable thickness to acheive the desired degree of rigidity is commonly mounted with the flexure 22 to the actuator arm 24. The beam 36 is vertically aligned with the flexure 22 and extends sufficiently so that its end region is closely adjacent to the tab structure 26 of the head 18. As indicated in Figure 3, the preferred maximum clearance between the lower surface of the beam 36 and the top surface of the opposed adjacent tab structure 26 is .006 inch (.015 centimetre).

A third preferred embodiment is illustrated in Figure 4. Therein, a tab structure 38 is mounted on the Whitney flexure 22 at a location which is intermediately between the head 18 and the actuator support arm 24 and is closely spaced away from the precise surface 28.

A fourth approach is illustrated in Figure 5. Therein, a substantially non-yielding elastomer bead 40 is placed between the beam 36 and the transducer 18. The bead dampens and absorbs shock forces that would otherwise become stored in the head 18 and result in head slap damage to the disk surface 20.

A final preferred approach is shown in Figures 6 and 7. Therein, a disk drive 100 includes a base casting 101 to which a plurality of disks 102, 104, 106 and 108 are rotatingly mounted. A comb type head support arm assembly 110 is rotatably driven by an electromechanical mover 111, and the assembly 110 supports eight flexures 112 which in turn secure eight data transducers 114. The arm assembly 110 is normally biased to return the heads 114 to an inner landing zone whenever power is disconnected, or the

-8- 0175839

disks cease to rotate at the proper speed, or whenever the disk drive is reset. The arm assembly 110 is suitably locked so that the heads 114 are physically restrained at the landing zones of each disk surface whenever the disk drive is to be subjected to handling and or shipping.

In the embodiment illustrated in Figures 6 and 7, protection against damage from head slap of the heads 114 is limited to the inner concentric landing zones of the disks. This embodiment represents a practical compromise between the cost of implementing the idealized solution illustrated and discussed in connection with Figures 1 and 2 and the practical reality that most damage to disk surfaces and to data transducers occurs during shipping or power down activities. To implement the invention in the disk drive 100, flanges 116 are provided between the data transducers 114. The flanges 116 are formed as a part of a disk spindle hub assembly 118 which is rotated by a brushless DC spindle motor 120 in accordance with known technology.

It will be appreciated that the flanges 116 are not only quite easily formed and installed, they provide a self-registration with the disk surface, so that if there is any wobble or relative movement of the hub assembly 118 in response to the impulse shock forces, the clearance between the transducers 114 and each adjacent precise surface of the flanges 116 remains the same.

The features disclosed in the foregoing description, in the following claims and/or in the accompanying drawings may, both separately and in any combination thereof, be material for realising the invention forms thereof.

## CLAIMS

1.      A rotating disk data storage device comprising a base, at least one data storage disk rotatingly spindled to the base and rotated by spindle motor means, said disk including at least one major surface adapted for storage of useful data in the form of magnetic flux reversals recorded thereon, a data transducer mounted at one end of a flexure and held in close proximity to the data storage surface upon an air bearing resulting from relative movement between the transducer and the disk, transducer actuator means mounted to the base and connected to the other end of the flexure for moving the transducer between selected concentric data tracks of the data storage surface during track-seeking operations and for maintaining the transducer in alignment with each selected data track during read/write operations, and transducer restraint means for restraining the range of movement of the transducer along a locus generally normal to the plane of the data storage surface.

2.      A rotating disk data storage device according to Claim 1, wherein the transducer restraint means limits the range of movement of the transducer to not more than fifteen thousandths of a centimetre.

3.      A rotating disk data storage device according to Claim 1, wherein the data storage surface includes an inner concentric region devoted to a landing zone for the transducer to and maintaining the transducer at the landing zone during power off conditions, the disk including a mounting hub rotatingly engaging a spindle of the base, the transducer restraint means comprising a flange of the mounting hub extending radially outwardly over the landing zone and being adapted to the range of movement of the transducer when it is at the landing zone.

4.      A rotating disk data storage device according to Claim 1, wherein the flexure includes an upwardly extending tab member and wherein the transducer restraint means comprises a precisely ground surface of the base substantially parallel to the disk surface adjacent to the tab member throughout its locus of movement.

5.    A rotating disk data storage device according to Claim 1, wherein the transducer restraint means comprises a beam formed as a part of the transducer actuator means and generally overlying the flexure and including a stop to limit the range of movement of the transducer.

6.    A rotating disk data storage device according to Claim 1, wherein the transducer restraint means comprises a beam formed as a part of the transducer actuator means and generally overlying the flexure and including a substantially non-yielding elastomer bead placed between the beam and the said transducer to dampen shock forces applied to the head transducer normal to the plane of the disk surface and to limit the range of movement of the transducer in response to the forces.

FIG. 1

FIG. 2

FIG.3

36    28

‹.015cm

22    26    18

FIG.4

32    30    32

24    20    38    28    18

FIG.5

36

20    40    18

110    112  116 114    118    102
104
106
108

111

101    100    120

FIG.6

110    112    116    114

102

FIG.7

**European Patent Office**

**EUROPEAN SEARCH REPORT**

## DOCUMENTS CONSIDERED TO BE RELEVANT

EP 85105438.7

| Category | Citation of document with indication, where appropriate, of relevant passages | Relevant to claim | CLASSIFICATION OF THE APPLICATION (Int. Cl. 4) |
|---|---|---|---|
| X | US - A - 4 370 687 (SHIRAISHI) <br> * Fig. 2; column 3, lines 56-65 * | 1 | G 11 B 5/012 |
| X,D P | US - A - 4 490 635 (HARRISON) <br> * Fig. 1 * | 1 | |
| A | DE - B2 - 2 629 755 (IBM) <br> * Fig. 3 * | 1 | |
| A | FR - A - 2 199 157 (TED) <br> * Fig. 6; page 8, lines 22-33 * <br> ---- | 6 | |

|  |
|---|
| **TECHNICAL FIELDS SEARCHED (Int. Cl. 4)** |
| G 11 B 5/00 <br> G 11 B 7/00 <br> G 11 B 21/00 <br> G 11 B 23/00 <br> H 02 K 33/00 <br> H 04 N 5/00 |

The present search report has been drawn up for all claims

| Place of search | Date of completion of the search | Examiner |
|---|---|---|
| VIENNA | 25-11-1985 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82